# DEMANDE DE BREVET EUROPEEN

(11) **EP 1 739 094 A1**
(43) Date de publication de la demande: **03.01.2007**
(21) Numéro de dépôt: 05447159.4
(22) Date de dépôt: 30.06.2005
(51) Int. Cl.: C08B 37/00

(54) **Procédé de purification de polysaccharides chargés électriquement**

(71) Demandeur: Faculté Universitaire des Sciences Agronomiques de Gembloux, 5030 Gembloux (BE)
(72) Inventeur: Paquot, Michel, 5310 Novgille/Mehaigne (BE); Wathelet, Bernard, 5100 Wépion (BE); Garna, Haikel, Sousse (TN); Robert, Christelle, 6953 Forrières (BE)
(74) Mandataire: Bird, Ariane

(57) **Abrégé**

L'invention se rapporte à un procédé de purification d'un polysaccharide chargé électriquement de préférence choisi parmi les alginates, les gommes de xanthanes, les carraghénanes, les pectines et le chitosane, par co-précipitation avec une protéine réversible.

## Description

### Domaine de l'invention

La présente invention concerne un procédé de production et de purification de polysaccharides chargés électriquement ainsi que les polyssacharides purifiés obtenus par ce procédé.

### Arrière-plan de l'invention

Les polysaccharides sont des glucides de haut poids moléculaire pouvant être constitués d'unités osidiques (sucres simples, monosaccharides) liées de différentes façons (1-3, 1-4, 1-2, 1-6, etc). Il peut s'agir d'homopolymères si le polysaccharide est constitué d'un seul et même type de sucres, par exemple l'amidon ou la cellulose. Il peut aussi d'agir d'hétéropolymères tels que les pectines, les alginates, les galactomannanes, la gomme arabique si le polysaccharide est constitué de plusieurs types de sucres. Le type d'unités osidiques, le type de liaison, et/ou la présence de groupes fonctionnels (sulfate, carboxylique, ...etc) leur confèrent des structures et des propriétés différentes. Ils sont employés dans différents secteurs industriels, dont l'agro-alimentaire, les cosmétiques, l'industrie pharmaceutique, etc. Ils peuvent être obtenus à partir de plantes (amidon, inuline, etc...) ou d'autres végétaux (cellulose, gomme arabique, etc...) ou d'algues (carraghénanes, alginates, etc...) (gomme de xanthane).

La plupart du temps, la production industrielle de polysaccharides nécessite une étape d'extraction et très souvent, une étape de purification.

Il existe plusieurs catégories de polysaccharides chargés électri-quement. Les alginates d'ammonium, de calcium, de potassium et de sodium sont des sels de l'acide alginique. Ce dernier est sous forme de sels peu solubles et accompagné d'autres polysaccharides dans la paroi cellulaire de différentes algues brunes (rhodophycées). Pour l'extraire, on utilise du varech, principalement *Macrocystis pyrifera* et différentes espèces de *Laminaria.* La teneur en acide alginique des algues brunes peut atteindre de 12 à 35 % en poids de la substance sèche selon l'espèce et la saison. L'acide alginique est un polysaccharide linéaire composé d'acide D-mannuronique et L-guluronique reliés par une liaison β-1,4-glycosidique, dans lequel la proportion de ces éléments monomères peut varier dans une large mesure. Des valeurs de l'ordre de 20.000 à 240.000 daltons sont indiquées pour la masse moléculaire des alginates.

La gomme de xanthane est un polysaccharide extracellulaire d'origine microbienne. Son extraction intervient par fermentation au moyen de *Xanthomonas campestris* suivie d'une précipitation à l'alcool du filtrat de culture. De masse moléculaire habituellement supérieure à 1.000.000 daltons, la gomme de xanthane est composée de D-glucose, de D-mannose et d'acide D-glucuronique en proportions d'environ 2/2/1 et contient environ 5 % en poids d'acétate et environ 3% en poids de pyruvate. Elle forme des solutions pseudoplastiques très visqueuses dans l'eau froide, dont la viscosité dépend peu de la température et/ou du pH. La gomme de xanthane se mélange bien avec des sels et des hydrocolloïdes, et forme des gels de consistances diverses avec les galactomannanes. La gomme de xanthane est disponible sous forme de sels de sodium, de calcium ou de potassium en poudre de couleur claire.

Le carraghénane désigne les extraits séchés de varech rouge (rhodophycées). Les algues rouges purifiées sont extraites à la vapeur par des alcalis. L'extrait clarifié est soit séché directement soit mélangé avec de l'alcool pour provoquer la précipitation du carraghénane. Les espèces présentes dans le commerce sont les λ, les κ et les T-carraghénanes. Le λ-carraghénane est une molécule linéaire composée d'éléments dimères, β-D galactosido (1,4)-α -D-galactose, ces dimères étant reliés entre eux par des liaisons 1,3-glycosidiques. Le groupement alcool primaire de α-D-galactose est estérifié par l'acide sulfurique et les groupements hydroxyles du C-2 des deux galactoses sont également estérifiés à environ 70% par l'acide sulfu-rique. Le λ-carraghénane affiche donc une teneur en sulfates de 32 à 39% en poids environ.

Les carraghénanes κ et T. sont basés sur les carrabioses, dimères au sein desquels le β-D-galactose 1,4-glycosidique est lié à l'α-D-3,6-anhydrogalactose. Ces dimères forment des molécules linéaires par des liaisons 1,3-glycosidiques. La différence entre les deux types de carraghénanes se situe au niveau des sulfates. Dans le κ-carraghénane, le groupement ester sulfate se trouve au C-4 du galactose et la teneur en sulfates oscille entre 25 et 30 % en poids environ. Dans le T-carraghénane, le groupement hydroxyle est de plus estérifié en acide sulfurique au C-2 de l'anhydrogalactose, et la teneur en sulfates atteint ici entre 28 et 35 % en poids environ.

La pectine est un hétéropolysaccharide anionique constitutif des parois primaires et de la lamelle moyenne des végétaux. C'est un polymère ramifié composé d'unités acides uroniques de D-galactopyranosyl liées par les liens α1,4-glycosidiques formant de longues chaînes d'acide polygalacturonique interrompues par des unités de rhamnose sur lesquels se fixent des ramifications (D-galactose, L-arabinose, D-xylose). Une partie des groupes carboxyliques des unités acides uroniques sont également estérifiées par du méthanol.

Dans la production industrielle conventionnelle, la pectine est la plupart du temps obtenue à partir de la matière végétale en traitant celle-ci par de l'eau, de l'acide, une base, un chélatant ou par voie enzymatique dans des conditions appropriées. L'étape de la séparation entre la matière végétale dépectinisée et le jus riche en pectine se réalise soit par filtration ou par centrifugation pour obtenir un extrait contenant entre autre la pectine soluble. Cette dernière est alors précipitée puis séparée et séchée pour obtenir un produit commercial de pectine.

L'extraction industrielle des alginates est similaire à celle de la pectine et s'effectue par exemple dans une solution aqueuse légèrement basique. L'extrait est filtré, les polysaccharides sont récupérés par précipitation alcoolique ou par addition d'ions métalliques.

Les procédés de purification connus dans l'industrie des pectines reposent sur la précipitation des pectines au départ d'extrait avec soit des solvants organiques (éthanol, méthanol) soit des solutions de sels métalliques. La méthode de récupération à l'alcool est la plus utilisée à l'échelle industrielle en raison de sa simplicité. L'éthanol est souvent employé et précipite les pectines par élimination d'eau retenue par ce polymère. Les composés de poids moléculaires faibles sont ainsi éliminés par cette technique. Toutefois, d'une part le recours aux solvants organiques peut être dommageable pour l'environnement et d'autre part la pectine ainsi purifiée contient une quantité trop importante de polysaccharides neutres de haut poids moléculaire. D'autres procédés exploitent les interactions électrostatiques entre polymères chargés et des ions métalliques multivalents, tels que le cuivre et l'aluminium, qui se lient spécifiquement avec les fonctions carboxyles libres des pectines et forment des complexes pectines-ions métalliques insolubles. L'élimination de ces métaux se fait par lavage au moyen d'alcool acidifié ou par précipitation des ions avec un agent complexant tel que l'acide ethylènediamine tétraacétique. Cette technique de purification de la pectine permet l'élimination des contaminants non-uroniques. Cependant ce traitement par des métaux présente le désavantage d'être polluant.

A notre connaissance, la purification des polysaccharides par des protéines n'a jamais été étudiée, quoique les interactions polysaccharides-protéines aient été largement débattues dans la littérature.

La purification et le fractionnement des pectines en fonction de leurs poids moléculaires peuvent également être réalisés par dialyse. Toutefois, outre son coût élevé, cette technique est basée sur la séparation des tailles et donc est non spécifique aux pectines.

La chromatographie échangeuse d'ions est aussi utilisée pour séparer et fractionner les molécules de pectines en fonction de leur degré de méthylation.Toutefois, plusieurs facteurs tels que la distribution des fonctions carboxyles libres, le contenu en sucres neutres, le poids moléculaire et le contenu en acide phénolique des pectines, jouent un rôle important dans la séparation des différentes fractions. Le coût de ce procédé, la création de sel dans le produit fini et la durée de purification assez importante limitent toutefois l'utilisation de cette technique à l'échelle industrielle.

### Résumé de l'invention

Dans son expression la plus générale, la présente invention concerne un procédé de purification d'un polysaccharide chargé électriquement, de préférence choisi parmi les alginates, les gommes de xanthanes, les carraghénanes, les pectines et le chitosane, ledit procédé comprenant les étapes suivantes:
(a) la préparation d'une première composition comprenant au moins ledit polysaccharide chargé électriquement et d'une deuxième composition comprenant au moins une protéine réversible chargée électriquement, les signes des charges électriques dudit polysaccharide et de ladite protéine contenus respectivement dans la première composition et dans la deuxième composition étant opposés l'un à l'autre;
(b) la mise en contact de la première composition et de la deuxième composition à un pH de précipitation suffisamment éloigné du point isoélectrique de la protéine réversible de la deuxième composition pour obtenir la formation d'au moins un complexe polysaccharide -protéine par précipitation;
(c) la récupération du complexe polysaccharide-protéine formé dans l'étape (b);
(d) la mise en solution dans un milieu aqueux du complexe poly-saccharide-protéine récupéré dans l'étape (c) à un pH suffisamment éloigné du point isoélectrique de la protéine réversible pour obtenir la solubilisation dudit complexe, les signes des charges électriques du polysaccharide et de la protéine réversible dans la solution étant identiques;
(e) la mise à pH de la solution au point isoélectrique de la protéine réversible pour obtenir la précipitation de la protéine réversible;
(f) la récupération du polysaccharide chargé électriquement purifié; et la récupération de la protéine réversible précipitée.

L'invention concerne aussi un polysaccharide chargé électriquement purifié selon ce procédé, ainsi qu'une composition alimentaire, pharmaceutique ou cosmétique comprenant au moins un tel polysaccharide.

### Définition

Par " protéine réversible ", on entend dans le cadre de la présente invention une protéine qui, après avoir subi un traitement physico-chimique tel que par exemple une variation de pH ou un traitement thermique (par exemple par pasteurisation, stérilisation ou UHT), conserve ses propriétés de solubilité et/ou ses propriétés de précipitation d'un polysaccharide chargé électriquement.

### Brève description des dessins

La figure 1 représente schématiquement le principe général de fonctionnement du procédé selon l'invention appliqué à la purification d'un polysaccharide par une protéine.

La figure 2 représente schématiquement le principe de fonctionnement d'un mode de réalisation du procédé selon l'invention à la purification d'une pectine par un caséinate.

La figure 3 représente les courbes de titrage de pectine de pomme par le caséinate de sodium en fonction du pH.

La figure 4 représente l'évolution de la charge électrique de de pectine de pomme et de caséinate de sodium en fonction du pH.

La figure 5 représente les courbes de titrage de pectine de pomme par le caséinate de sodium à pH 3,5 en fonction de différentes concentration de sel ajouté.

La figure 6 représente l'évolution de la compositrion en pectine de pomme et en protéine dans le surnageant et dans le culot après précipitation de pectine par le caséinate à pH 3,5 en fonction de différentes concentration de sel ajouté.

La figure 7 représente l'évolution de la teneur en sucres neutres d'une pectine commerciale comparée à des pectines purifiées par le caséinate de sodium à différentes concentrations en sel.

### Description détaillée de l'invention

La présente invention a trait à un nouveau procédé de production de polysaccharides chargés électriquement pouvant s'appliquer directement après leur extraction. L'invention peut s'appliquer également sur des polysaccharides chargés électriquement concentrés ou séchés, après leur remise en solution.

La présente invention s'applique aussi bien à des polysaccharides cationiques tels que le chitosane qu'à des polysaccharides anioniques tels que les pectines, les carraghénanes, les alginates et la gomme de xanthane. L' invention s'applique aussi à des celluloses microcristallines enrobées de carboxyméthylcellulose, et à des polysaccharides sulfonés.

L'invention consiste à utiliser des protéines réversibles pour précipiter des polysaccharides chargés électriquement, ces protéines réversibles étant préférentiellement les caséines, les caséinates, les protéines de pois comme par exemple le pisane ou encore les protéines réversibles de soja. En effet, de manière Surprenante, des protéines réversibles telles que les caséinates peuvent encore être dissociés des polysaccharides chargés électriquement après précipitation, puis récupérés et réutilisés par la suite.

Quoique l'invention ne soit pas limitée à l'emploi de caséinate, elle sera maintenant expliquée en plus grand détail par référence à ce dernier. La caséine, constituant 80 à 85 % des protéines du lait de vache, a une structure micellaire composée de quatre protéines différentes (caséine αₛ₁, caséine αₛ₂, caséine β et caséine κ, dans des proportions en poids approximativement de 4/1/4/1). Les caséines acides sont obtenues à partir de lait écrémé, traité par précipitation acide (HCl ou H₂SO₄) à un pH d'environ 4,6, ou par des ferments lactiques. A ce pH, le complexe micellaire est détruit et les caséines s'agrègent et précipitent sous la forme d'un coagulum. Les caséinates sont obtenus par neutralisation de la caséine par des sels, essentiellement de calcium, de sodium, de potassium ou d'ammonium. Le lait écrémé est coagulé par l'action de la présure (extrait enzymatique de l'estomac de veau ou d'origine microbienne). Celle-ci agit spécifiquement sur la κ-caséine en coupant la liaison phénylalanine - méthionine de la chaîne protéique. Cela provoque l'apparition de deux fragments : la para-κ-caséine qui précipite en présence de calcium, et le caséinoglycopeptide qui reste soluble. La κ-caséine étant essentielle à la stabilité du complexe micellaire, ce dernier précipite aussi avec la para-κ-caséine sous la forme d'un caillé : la caséine présure. La caséine ainsi obtenue conserve son état natif micellaire et est pratiquement insoluble dans l'eau ; sa solubilisation aqueuse requiert des conditions, telles qu'un pH très élevé (supérieur à 9,0) ou bien l'addition d'un complexant du calcium, qui détruiront sa nature micellaire.

L'invention est basée sur les interactions attractives que peuvent présenter à certains pH, des protéines réversibles et des polysaccharides chargés électriquement. Les deux types de composés précipitent alors sous forme d'un complexe en laissant la plupart des autres constituants dans la phase aqueuse. Ces interactions peuvent être optimisées par une mesure de charge électrique à l'aide, par exemple, d'un appareil de type MUTEK. Le complexe résultant peut être rendu irréversible par chauffage et fournir un premier type de produit nouveau. Un tel traitement thermique par chauffage, de préférence à une température comprise entre 40°C et 100°C environ, peut aussi favoriser l'interaction des protéines résiduelles sur le polysaccharide et améliore ses propriétés émulsifiantes et stabilisantes.

De manière inattendue, le complexe intermédiaire obtenu peut aussi présenter des propriétés réversibles, maîtrisables par des mesures de charges électriques, en modifiant le pH du milieu. Le polysaccharide chargé électriquement peut ainsi être séparé des protéines à ce pH modifié, par exemple par ultrafiltration.

Toutefois, de manière encore plus originale, en choisissant une protéine pouvant précipiter à son point isoélectrique, il est possible de la récupérer sélectivement par précipitation. Des exemples non limitatifs de telles protéines sont les caséinates, les protéines de sérum de lait, des protéines de sérum sanguin, les protéines de pois, les protéines de soja.

La plupart des protéines ne présentent plus les mêmes propriétés après précipitation car elles doivent être dénaturées par chauffage, par exemple, et elles ne peuvent être recyclées pour répéter l'opération, ce qui constitue un inconvénient.

L' utilisation de protéines réversibles telles que les caséinates, les protéines de pois ou de soja permet de rendre le procédé selon l'invention particulièrement attractif. Les caséinates ne doivent pas être dénaturés par chauffage pour précipiter et supportent même un traitement de chauffage éventuel, de préférence à une température comprise entre 40°C et 100°C environ, pour optimiser leur récupération.

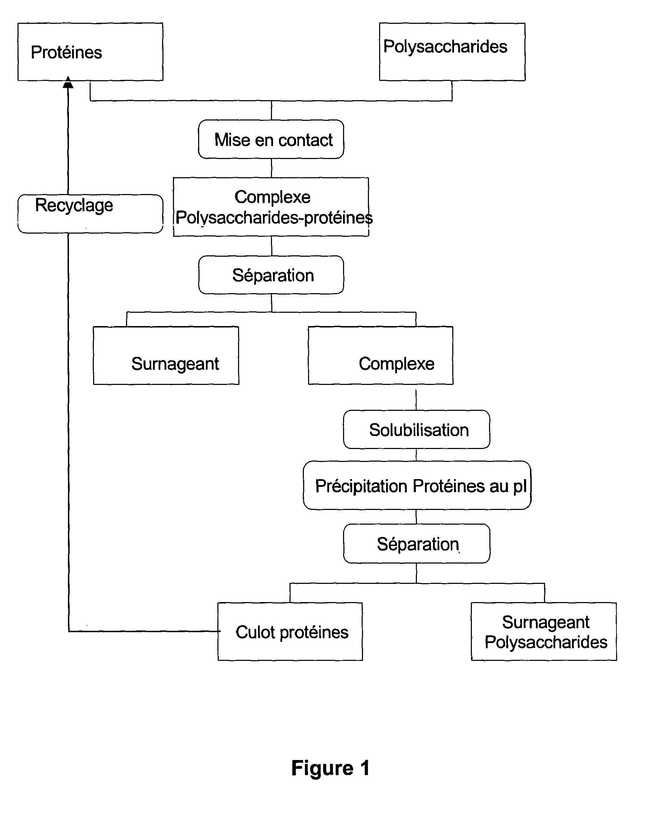

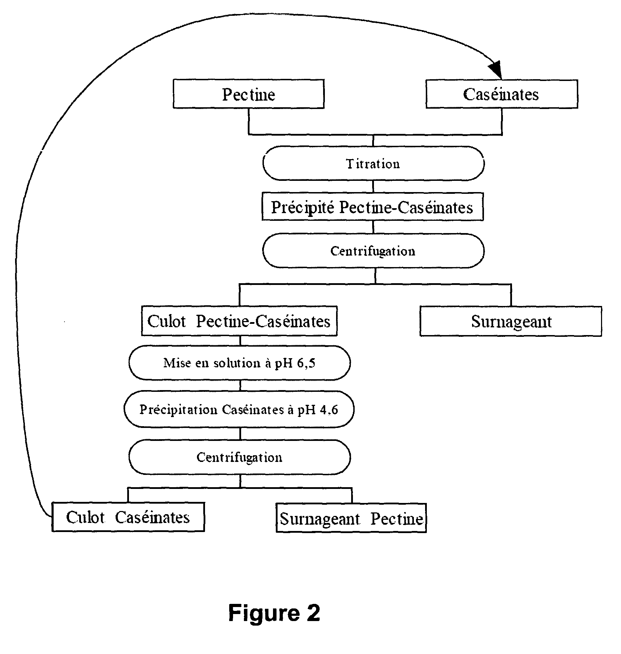

Les principes exposés ci-dessus sont représentés schématiquement sur la figure 1 et, dans un mode de réalisation particulier, sur la figure 2.

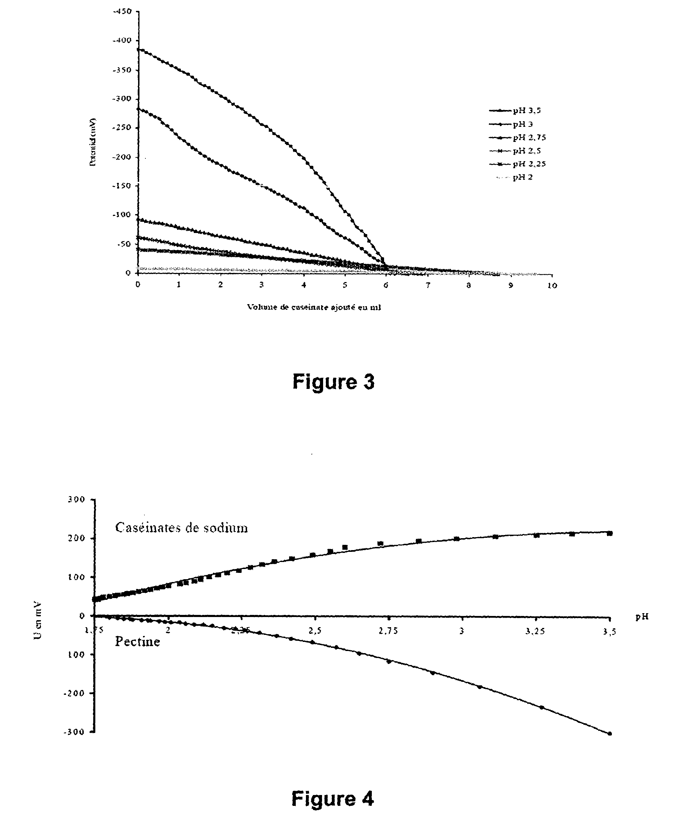

Les caractéristiques principales de l'invention seront mieux comprises en se référant à la description détaillée qui suit, concernant la purification de pectine de pomme par un caséinate, et illustrée par les figures 3 à 7. Cette description détaillée ne limite toutefois pas la portée de l'invention.

La purification comprend les étapes de précipitation des pectines par les protéines, puis de séparation des pectines des protéines.

La précipitation des pectines commerciales de pommes (Fluka 76282) par des caséinates de sodium (Sigma C-8654) est suivie à l'aide d'un titrateur automatique Metrohm relié à un détecteur de charge de type Mütek PCD 03 pH. Ce détecteur permet de déterminer la charge globale d'une dispersion aqueuse par mesure d'un courant (en mV) qui est généré par séparation des contre-ions des macromolécules dissoutes ou des particules. Différents facteurs influencent la charge d'un échantillon tels que la conductivité électrique de la dispersion, la viscosité, la présence d'ions, le poids moléculaire des particules, la dimension de la cellule de mesure, et la température. L'expérience de précipitation est réalisée par des ajouts de caséinate par incréments dans l'enceinte contenant de la pectine en fonction de différents pH. Le titrage est arrêté quand la charge globale de la solution à titrer est annulée.

La mesure du courant par le détecteur de charge Mütek est assurée grâce à une cellule de mesure en téflon et un piston. La cellule est remplie par une solution aqueuse de colloïdes qui s'adsorbent sur la surface de celle-ci sous l'action des forces de Van der Waals. Les contre-ions présents restent relativement libres. Un espace très étroit est formé entre la paroi de la cellule et le piston après l'introduction de ce dernier dans la cellule de mesure. Ce piston est ensuite entraîné par un moteur. Son oscillation engendre un débit de liquide assez fort pour déplacer des contre-ions libres et les séparer ainsi des colloïdes adsorbés. Arrivés au niveau de l'électrode, les contre-ions induisent un courant qui est rectifié et amplifié électroniquement.

Un mode opératoire typique est le suivant : 10 ml de pectine (1g/l) à un pH déterminé compris entre 1,75 et 3,5 sont prélevés et mis dans le godet du potentiomètre. Le titrateur automatique mesure le volume de caséinate (5g/l) au pH de la solution de pectine, qu'il est nécessaire d'ajouter, par incréments de 0,1 ml, pour annuler la charge globale de la solution. Une fois que la précipitation a eu lieu, les précipités et les surnageants doivent être séparés. Pour cela, une centrifugation est réalisée afin de consolider le précipité sous forme de culot. Les surnageants et les culots sont récupérés indépendamment de manière à déterminer la composition de chaque phase. La centrifugation à 3000 tours /minute est maintenue pendant une heure. La teneur en pectine a été déterminée dans le surnageant après hydrolyses acide douce et enzymatique. La teneur en caséine a été déterminée par dosage de l'azote selon la méthode de Kjeldahl.

2 ml de surnageant sont hydrolysés par 2ml d'acide trifluoroacétique 0,4M à 80°C durant 72 heures. L'hydrolysat est dilué dans un ballon jaugé de 25 ml après mise à pH 4,6. 2ml de cette solution sont ensuite mélangés avec 2 ml de viscozyme L9 dilué 250 fois contenant 0,2 mg/ml d'acide glucuronique et de 2-déoxy-glucose. Le tout est incubé à 50°C pendant 2 heures. L'échantillon obtenu est injecté sur colonne PA10 après inactivation de l'enzyme à 100°C durant 3minutes. L'analyse de l'acide galacturonique est effectuée par chromatographie échangeuse d'anions à haute performance couplée à un détecteur ampérométrique. Les sucres sont coélués en isocratie avec NaOH 100mM durant 5 minutes. Les acides uroniques sont ensuite élués par un gradient de NaOH 100mM et d'acétate de sodium 170mM. La colonne est nettoyée et rééquilibrée avec NaOH 100mM durant 7minutes avant l'injection suivante. 25 µl d'échantillon sont injectés.

Le dosage de protéines s'effectue selon la méthode de Kjeldahl, après une minéralisation acide de l'échantillon (370°C durant 90 minutes) et titrage de l'ammoniac résultant. Le facteur d'équivalence entre l'azote ammoniacal dosé et la teneur en protéines est de 6,25.

L'effet du sel sur la précipitation des pectines a été étudié à pH 3,5 en fonction de différentes concentrations de NaCl. Pour cela, 10 ml de pectine (1g/l) à pH 3,5 à des concentrations de NaCl de 0 mM, 10 mM, 30 mM, 50 mM ou 70 mM respectivement sont tltrées automatiquement jusqu'à annulation de sa charge globale par une solution de caséinate de sodium (5 g/l) au même pH et de même concentration en sel que la solution à titrer. La séparation du culot et du surnageant aussi bien que les analyses d'acide galacturonique et de protéines sont effectuées comme précédemment.

Les culots pectines/caséinates obtenus lors de l'étape précédente du procédé de purification sont mis en solution à pH 6,5 afin d'éviter une déméthylation des pectines et d'assurer une mise en solution totale des protéines. Cette étape est suivie par une précipitation des caséinates à leur point isoélectrique, après ajout de différentes quantités de sel. Les pectines sont ensuite récupérées dans le surnageant par centrifugation. Un mode opératoire particulier est le suivant. Les culots obtenus à pH 3,5, après précipitation de 100 ml de pectine (1 g/l ou 5 g/l) par les caséinates de sodium (5 g/l ou 10 g/l), sont mis en solution dans 70 ml d'eau distillée. Le pH de cette dispersion est augmenté progressivement jusqu'à pH 6,5 par l'ajout de NaOH 1 M. Après la mise en solution du culot, différentes quantités de NaCl sont ajoutées pour atteindre des concentrations de 20 mM, 50 mM, 100 mM et 200 mM respectivement. Ces solutions sont ensuite amenées à pH 4,6 par ajout de HCl et la précipitation des caséinates est observée. Les tubes contenant les précipités de caséinates sont centrifugés à 10.000 tours/minute durant 30 minutes. Les surnageants de pectines sont récupérés et analysés selon leur teneur en acide galacturonique et en protéines comme décrit précédemment. Les sucres neutres sont déterminés par chromatographie en phase gazeuse après leur dérivatisation en acétates d'alditols, en utilisant le même hydrolysat qui a servi pour le dosage de l'acide galacturonique.

Les pectines utilisées sont d'abord extraites à partir des pulpes de pommes en utilisant différentes conditions de pH, de température et de temps d'extraction. Elles sont ensuite purifiées par précipitation à l'éthanol ou par les caséinates de sodium, puis les jus et les pectines purifiés font l'objet d'une caractérisation chimique comme suit.

Les pulpes de pommes stockées à -18°C sont récupérées dans un vase en polyéthylène puis mélangées à l'aide d'une spatule pour assurer l'homogénéité de l'échantillon. Une aliquote de 50 g de ces pulpes est prélevée et transférée dans un récipient en inox de 5 litres, contenant 1 litre d'une solution d'acide sulfurique à pH 1,5 ou 2,0 et à une température de 80°C ou de 90°C. L'extraction est effectuée pendant 1 à 3 heures. Après extraction, la suspension de pulpe est répartie dans trois flacons en polytétrafluoréthylène (PTFE) de 1 litre chacun puis centrifugée à 10.000 tours/minute) pendant 20 minutes. Le surnageant (jus) est récupéré dans un flacon de 5 litres et son pH est ajusté à pH 3,5 par l'ajout de soude 1 M.

Pour précipiter la pectine (700ml de jus), on lui ajoute 4 fois son volume en éthanol dénaturé à 96% (concentration finale en éthanol, 80% en volume). La solution obtenue est répartie dans 8 flacons en PTFE et centrifugée à 10.000 tours/minute) pendant 20 minutes. Le surnageant est éliminé et le précipité est séché à 40°C durant 24 heures.
Pour la purification par le caséinates de sodium, différents ratios caséinate/acide galacturonique ont été utilisés afin de déterminer la quantité de caséinate à ajouter pour une précipitation totale des pectines. En fonction des conditions d'extraction et de la quantité d'acide galacturonique (GalA) dans les jus, des ratios GalA : caséinate de 1:1, 1:3, 1:6, 1:12, 1:24, 1:36 et 1:48 respectivement ont été choisis. Dans toutes les expériences, 2 ml de jus brut (jus d'extraction) sont utilisés. Une fois que la précipitation a eu lieu après l'ajout des différentes quantités de caséine, les précipités sont séparés des surnageants par centrifugation à 3000 tours/minute pendant une heure. La teneur en pectine est ensuite déterminée par dosage de l'acide galacturonique dans les surnageants en fonction des différents ratios. Après optimisation en fonction des conditions d'extraction, les pectines de jus brut sont précipitées par les caséinates de sodium en utilisant le rapport GalA/Caséinate pour lequel la précipitation maximale est observée. 100 ml de jus à pH 3,5 sont précipités par le caséinate de sodium à pH 3,5 et à une concentration de 10 g/l. Les surnageants sont ensuite récupérés par centrifugation à 10.000 tours/minute pendant une heure. Ils sont analysés pour leur contenu en pectines et en protéines. Les pectines contenues dans les culots sont séparées des caséinates comme décrit précédemment avec emploi de sel (NaCl). L'échantillon à purifier (100 ml) est concentré deux fois (50 ml) par la mise en solution du culot pectines/caséinates obtenu lors de la première étape de procédé dans un volume d'eau 2 fois moindre que le volume de départ. Les culots sont dispersés dans 30 ml d'eau distillée. Le pH de cette dispersion est augmenté progressivement jusqu'à pH 6,5 par l'ajout progressif de NaOH 1 M. Après la mise en solution du culot, une quantité de NaCl est ajoutée dans cette solution pour obtenir une concentration de 100 mM. Ces solutions sont ensuite amenées à pH 4,6 par ajout de HCl et la précipitation des caséinates est observée. Les tubes contenant les précipités de caséinates sont traités de la même façon que précédemment.

Les jus d'extraction et les surnageants de pectines purifiées par les caséinates, en fonction des différentes conditions d'extraction sont caractérisés par le rendement en matières sèches, et les teneurs en acide galacturonique, en sucres neutres et en protéines déterminés comme précédemment. Les rendements sont exprimés en grammes et sont calculés sur base de la matière sèche du jus et des surnageants de pectines. 20 ml de ces solutions sont placés dans une étuve ventilée à 105°C jusqu'à obtenir une masse constante (environ 24 heures).

Le précipité obtenu à l'éthanol est caractérisé en fonction des différentes conditions d'extraction par le rendement en précipité, la teneur en acide galacturonique, sucres neutres et en protéines et par le degré d'estérification. Les rendements sont calculés soit sur base de la quantité de précipité obtenu à l'éthanol soit en ramenant cette quantité par rapport à la masse sèche des pulpes de pommes. Ils sont exprimés en grammes ou en pourcentages en poids. Pour déterminer le degré de méthylation et d'acétylation des pectines, celles-ci sont saponifiées par de la soude afin de libérer le méthanol et l'acide acétique. Ces composés sont ensuite dosés par chromatographie liquide haute performance avec une colonne à exclusion d'ions de Biorad et un détecteur à indice de réfraction. 50 mg de poudre d'extraction sont saponifiés pendant 24 heures à 4°C par 2ml d'une solution saponifiante constituée de NaOH 0,4N, isopropanol 50% et 1 mg/l d'acide succinique. Les mélanges sont ensuite centrifugés à 500 g pendant 20 minutes. Le surnageant est récupéré et filtré sur un filtre de 0,45 µm avant analyse chromatographique à l'aide d'un chromatographe Waters 2690 équipé d'un détecteur RI 2410 et d'une colonne HPx-87H (300mm*7.8mm). Les analyses sont réalisées à une température de 30°C et à un débit de 0,7 ml/minute. L'élution est effectuée en isocratie avec 5 mM d'acide sulfurique. Les protéines sont dosées comme précédemment à partir de 200 mg de poudre de précipité.

Les caractéristiques des pectines de pommes (Fluka 76282) et des caséinates de sodium (Sigma C-8654) utilisés dans le présent exemple sont indiqués dans le tableau 1 ci-après:

**Tableau 1**

| | Pectine de pommes | | Caséinate de sodium |
|---|---|---|---|
| Acide | | 82 | 0 |
| galacturonique | | | |
| | Rhamnose | 0,6 | |
| | Arabinose | 3,3 | |
| | Xylose | 0,3 | |
| % Sucres neutres | Mannose | 0,2 | |
| | Galactose | 5,2 | |
| | Glucose | 0,9 | |
| | Total | 10,5% | |
| degré d'estérification (%) | | 70-75 | 0 |
| Poids moléculaire (KDa) | | 30.000 - 100.000 | N.D. |
| % eau | | 7 | 7 |
| % cendres | | 4,1 | 3 |
| % protéines | | 0,7 | 90 |

Une optimisation, en fonction du pH, de la quantité de caséinate nécessaire pour précipiter une quantité donnée de pectine a été réalisée. Une solution de pectine de concentration 1 g/l a été titrée par une solution de caséinate de 5 g/l. Les résultats de cette expérience sont représentés dans la figure 3. L'axe des ordonnées représente le potentiel qui est représentatif de la charge totale de la pectine alors que l'axe des abscisses représente le volume de caséinate ajouté pour neutraliser la pectine. La charge de pectine décroît avec le pH, la charge la plus élevée étant obtenue au pH 3,5 correspondant au pKa des fonctions carboxyliques d'acide galacturonique auquel la pectine est fortement chargée négativement.

A un pH donné, la charge totale de la pectine diminue avec l'ajout de caséinate. Le volume de caséinate nécessaire pour annuler cette charge varie en fonction du pH. A pH 1,75 ; pH 2 ; pH 2,25 ; pH 2,5 ; pH 2,75 ; pH 3 et pH 3,5 respectivement, les volumes de caséinate ajoutés pour neutraliser la charge globale de la solution de pectine sont respectivement de 20 ml ; 9,6 ml ; 8,7 ml ; 6,9 ml ; 6,5 ml ; 6,2 ml et 6,1 ml. Ceci s'explique par le fait que les charges en valeur absolue des pectines augmentent avec le pH ainsi que celles des caséinates et que par conséquent cela augmente la force d'attraction entre ces deux molécules et facilite ainsi leur précipitation.

Une fois que la précipitation des pectines par les caséinates a eu lieu, les précipités et les surnageants ont été séparés par centrifugation. Les surnageants et les culots ont été récupérés indépendamment de manière à déterminer la composition de chaque phase en pectines et en protéines. Le dosage de la pectine est réalisé via l'acide galacturonique puisque ce dernier est le composant principal de ce polymère. Le tableau 2 montre les résultats obtenus sous forme de bilans massiques.

**Tableau 2**

| | Pectines (10 mg) | | Caséinates | | |
|---|---|---|---|---|---|
| | masse d'acide (mg) | galacturon. | masse de protéines (mg) | | % purification de pectines |
| pH | Surnageant | Culot | Surnageant | Culot | |
| 1,75 | 7,6 | 0 | 88 | 0 | 0 |
| 2 | 7,6 | 0 | 42,2 | 0 | 0 |
| 2,25 | 7,2 | 0,4 | 36,8 | 2,1 | 5,3 |
| 2,5 | 5,0 | 2,6 | 25,2 | 5,6 | 34,2 |
| 2,75 | 2,9 | 4,7 | 18,9 | 10,1 | 62,0 |
| 3 | 0,8 | 6,8 | 13,0 | 15,1 | 89,5 |
| 3,5 | 0,7 | 6,9 | 5,2 | 22,0 | 91,0 |

La quantité de caséinate ajoutée (masse surnageant + culot) pour neutraliser la pectine diminue avec l'augmentation du pH et varie de 27,2 mg à 88 mg. Aucune précipitation n'est observée à pH 1,75 et à pH 2 et la totalité des pectines est récupérée dans le surnageant, bien que 88 mg et 42,2 mg de protéines aient été ajoutés. Cependant, on remarque qu' à pH supérieur à 2,0, une partie des caséinates ajoutés se complexe avec les pectines alors que l'autre partie reste dans le surnageant. Cette répartition est variable en fonction du pH. En effet, 95 %, 82 %, 65 %, 46 % et 19 % de la quantité totale de caséinates ajoutée se trouve respectivement dans le surnageant à pH 2,25; pH 2,5; pH 2,75; pH 3.0 et pH 3,5. Notons aussi que le surnageant, contrairement au culot, s'appauvrit en pectine. Toutefois, il est à signaler qu'à pH 3, seulement 54 % de la quantité de caséinate ajoutée est précipitée avec les pectines contre 81% à pH 3,5, ce dernier sera donc choisi comme valeur optimale de pH pour la précipitation de pectines et de caséinates. C'est à cette valeur de pH que les pectines et les caséinates présentent en valeur absolue la charge la plus élevée (figure 4).

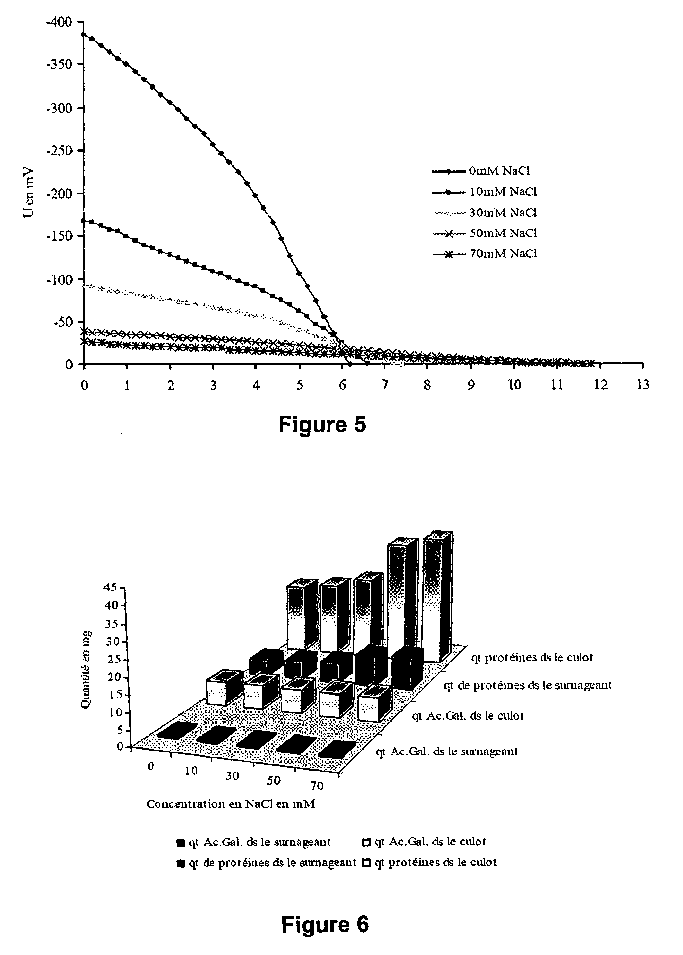

La précipitation des pectines par les caséinates est fortement dépendante de la charge de ces deux polymères. Celle-ci peut être influencée par certains facteurs tels que la présence de sels dans le milieu réactionnel. Une étude de l'effet du sel sur la formation du complexe pectine-caséinate a été ainsi réalisée à pH 3,5 en fonction de différentes concentrations en NaCl (0 mM, 10 mM, 30 mM, 50 mM et 70 mM) selon la méthode décrite ci-dessus. Les résultats sont représentés sur la figure 5.

D'après la figure 5, le potentiel de la pectine varie fortement en fonction de la concentration en sel ajouté, de -380 mV (0 mM NaCl) à -30 mV (70 mM NaCl). Cette diminution de la charge de la pectine est due principalement à la neutralisation des charges négatives de la pectine par les contre-ions cationiques. Après le titrage, les culots et les surnageants obtenus pour différentes concentrations en sel ont été analysés quant à leur teneur en acide galacturonique et en protéines. Les résultats sont présentés dans la figure 6.

D'après la figure 6, il est clair que le sel perturbe la précipitation des pectines par les caséinates puisque des quantités de protéines de plus en plus élevées sont ajoutées parallèlement à l'augmentation de la concentration en sel dans le milieu afin de précipiter la même quantité de pectine. Cet effet peut être attribué à la diminution des interactions électrostatiques entre les pectines et les caséinates en présence du sel. En effet, ce dernier modifie la charge des pectines et favorise l'association entre les protéines.

La séparation des pectines et des caséinates se réalise en premier lieu par la mise en solution du complexe insoluble pectine/caséine obtenu lors de la première étape du procédé de purification et en second lieu par la précipitation des protéines à leur point isoélectrique. Les essais de purification ont été réalisés sur 10 mg et 500 mg de poudre de pectine de pomme. La quantité de protéine qui précipite à pH 4,6 varie en fonction de la concentration du sel. En effet, sans ajout du sel, seulement 31% des protéines sont précipitées. Ce pourcentage augmente jusqu'à 97,3% en augmentant la concentration du sel jusqu'à 200 mM. Le pourcentage de pectine dans le surnageant augmente de 33 % à 92 % dans les mêmes conditions. De même le taux de récupération des pectines varie en fonction de la concentration en sel: 63 %; 68,5%; 75%; 85,5% et 89,5% de pectines sont respectivement récupérées à 0 mM; 20 mM; 50 mM; 100 mM et 200 mM de NaCl. Le sel joue ainsi un rôle important dans la séparation des pectines et des caséinates. Il a une grande influence sur les interactions électrostatiques entre ces deux polymères et sur leur compatibilité. L'augmentation de la force ionique du milieu favorise l'association entre les protéines, la diminution de leur solubilité et rend le système pectine-caséinates instable. Ce phénomène est essentiellement généré par la compétition entre les macromolécules et les ions vis-à-vis des molécules d'eau. En effet, à des fortes concentrations de sel, l'eau est rendue indisponible pour la solvatation des caséinates et contribue par conséquent à augmenter leur interaction (Carr *et al.,* 2002). Ceci va favoriser ensuite la précipitation maximale de caséinates à leur point isoélectrique quand la force ionique du milieu est élevée.

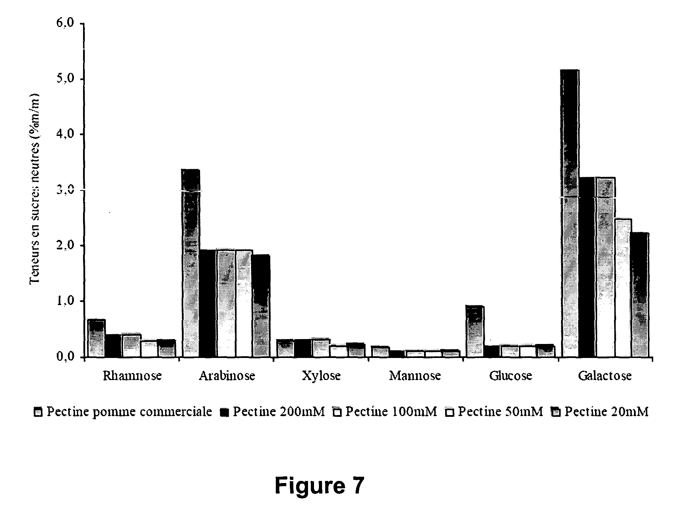

Nous avons aussi vérifié l'influence du procédé selon l'invention sur les teneurs en sucres neutres. Les pectines obtenues après purification par les caséinates de sodium à différentes concentrations en sel (20 mM à 200 mM) ont été analysées à cet égard. Les résultats sont présentés dans la figure 7.

D'après là figure 7 les teneurs en sucres neutres, principalement celles en arabinose, en galactose et en glucose des divers produits purifiés sont inférieures à celles de la pectine de départ. Certains de ses sucres peuvent faire partie de la pectine proprement dite ou peuvent être co-extraits avec elle. La pectine de pomme à purifier contient une teneur assez élevée en certains sucres neutres qui ont été précipités à l'éthanol lors du procédé industriel. Ce solvant entraîne aussi bien la précipitation des polysaccharides chargés et des neutres tels que les arabinanes, les galactanes, les arabinogalactanes ou encore de l'hémicellulose. Il est clair ainsi que la purification des pectines par les caséinates est une technique plus spécifique que celle de l'éthanol vis-à-vis des polysaccharides chargés.

En conclusion la purification des pectines par les caséinates de sodium se base principalement sur les interactions électrostatiques entre ces deux polymères. Celles-ci sont dépendantes de leurs charges qui varient avec le pH et la force ionique du milieu réactionnel. Le maximum de précipitation de pectines est obtenu à pH 3,5. A ce pH, la pectine est chargée négativement et la protéine est chargée positivement favorisant ainsi leur attraction. Par ailleurs, la dissociation du complexe et la précipitation des caséinates à pH 4,6 se fait de préférence en présence du sel. En fonction de la force ionique utilisée, divers produits de composition variable en pectine et en protéines peuvent être obtenus. En outre, les caséinates précipités peuvent être à nouveau utilisés pour une autre purification. Même si les quantités de protéines sont importantes, celles-ci peuvent être récupérées et recyclées à la fin du procédé. Ceci peut être réalisé par lavage du précipité de protéines avec de l'eau afin d'éliminer les sels et de permettre ainsi la remise en solution des caséinates pour une éventuelle nouvelle utilisation.

L'optimisation de la précipitation des pectines par les caséinates de sodium peut encore être réalisée en utilisant différents ratios acide galacturonique/caséinate afin de déterminer la quantité de protéines nécessaire pour une précipitation optimale. Quelles que soient les conditions d'extraction, le taux de récupération de pectines par rapport à la quantité de pectines extraites de départ (dans le jus d'extraction à 80°C ou à 90°C) augmente en fonction de ces ratios et demeure constant au-delà d'une certaine valeur. Un ratio Acide galacturonique/caséinate de 1:48 ou 1:36 est nécessaire à pH 1,5 en fonction de la température d'extraction, et de 1:24 à pH 2.0. Dans ces conditions en moyenne 87% à 91% des pectines sont récupérées. Cette variation au niveau de la quantité de caséinate en fonction des conditions d'extraction peut être expliquée par le fait que les jus d'extraction ont une pureté plus élevée en pectines à pH 2 qu'à pH 1,5. En effet à pH 1,5 d'autres substances sont coextraites en quantités non négligeables avec les pectines et peuvent entraver la précipitation des pectines.

Les pectines extraites à partir de pulpes de pommes ont été précipitées par les caséinates de sodium puis séparées de ces dernières par la mise en solution du complexe pectines/caséinates et la précipitation des caséinates à leur point isoélectrique. La quantité de caséinates nécessaire pour la précipitation des pectines est fortement dépendante des conditions d'extraction. En effet, cette quantité varie du simple au triple en passant de pH 2 à pH 1,5 même si des quantités assez semblables en acides galacturoniques sont extraites (à 90°C). Comparativement à la purification de poudre de pectine commerciale, des quantités plus importantes de caséinates sont nécessaires pour précipiter les pectines. Cette différence est due d'une part à la variation de la pureté des jus d'extraction en pectines et d'autre part à leur faible concentration en ces polysaccharides (0,7 à 1 g/l). Après précipitation des pectines par les caséinates à pH 3,5, il existe toujours une certaine quantité de pectine non précipitée dans le surnageant. Le pourcentage de perte varie de 6,9% à 17% en fonction des conditions d'extraction. Ce pourcentage est plus faible à pH 1,5 qu'à pH 2. En effet, les pectines extraites à pH 1,5 sont caractérisées par un degré de méthylation plus faible qui diminue avec l'accroissement du temps d'extraction. Ceci a pour effet d'accroître leur nombre de charges négatives et de faciliter leur précipitation par les caséinates. Les taux de récupération des pectines après précipitation des caséinates à pH 4,6 varient de 70% à 84% environ et sont légèrement supérieurs à pH 1,5 qu'à pH 2. Cette variation est due principalement à la précipitation plus élevée des pectines à pH 3,5 dans les conditions d'extraction plus acides (à pH 1,5).

Les exemples suivants illustrent de manière non limitative la purification de différents polysaccharides chargés électriquement conformément à l'invention.

### EXEMPLE 1

Une solution de pectine de pomme (Fluka 7682) est préparée à une concentration de 1 g/litre d'eau distillée. Cette pectine contient en moyenne 76,2 % d'acide galacturonique. Cette solution est amenée à pH 3,5 avec de la soude 1 M.

Une solution de caséinates de sodium (Sigma C8654) à 5 g/litre est préparée en amenant le pH largement en dessous du point isoélectrique par ajout d'acide chlorhydrique 0,6 N afin d'éviter la précipitation lors du passage au point isoélectrique (PI) des caséines (4,6) puis le pH a été ajusté à 3,5 par ajout de NaOH 0.9 M. La valeur de pH de 3,5 a été choisie pour obtenir une charge nette négative pour les pectines et positive pour les caséines aussi élevée que possible. Cette charge a été déterminée grâce au détecteur de charge Mütek PCD 03. En outre, la valeur de pH doit être inférieure au PI afin d'éviter la précipitation des caséines. De plus, afin d'éviter la dégradation des pectines le pH doit être compris entre 3 et 4.

100 ml de solution de pectine de pomme sont précipités par environ 64 ml de caséinates de sodium. La précipitation est observée visuellement et est vérifiée par la neutralisation des charges grâce au système Mutek. La centrifugation à 3000 tours/minute pendant 1 heure permet de consolider le précipité sous forme de culot. Ce complexe est dissocié dans 70 ml l'eau distillée. Le pH est remonté à pH 6.5 par l'ajout progressif de NaOH 1 M afin d'éviter une déméthylation des pectines qui pourrait se produire à des pH supérieurs et qui diminuerait la valeur des polysaccharides. La précipitation des caséines est ensuite provoquée en ajoutant HCl jusqu'à pH 4,6 (point isoélectrique de la caséine).

Les culots de caséines sont séparés des surnageants de pectines par centrifugation à 10000 rpm durant 30 minutes. Les caséines récupérées sont à nouveau utilisées dans le procédé. La quantité de protéines présentes dans le produit final peut être modulée en variant la concentration en NaCl comme le montre le tableau 3 (composition en acide galacturonique (GalA) des pectines de pommes et des protéines dans le culot et le surnageant à pH 3,5 et après la mise en solution du culot et la précipitation des caséinates à pH 4,6 en fonction de différentes concentrations de NaCl.

**Tableau 3**

| | | Pectines (500 mg) | | Caséinates (10 g/l) | | % protéines dans sur nageant | % récupération de pectines |
|---|---|---|---|---|---|---|---|
| | | Masse GalA (mg) | | Masse (mg) | | | |
| pH | [NaCl] (mM) | surnageant | culot | surnageant | culot | | |
| 3.5 | 0 | 15.3 | 366 | 180 | 1413 | 4 | 96 |
| 4.6 | 20 | 310.5 | 55.5 | 630 | 783 | 18.5 | 81.5 |
| | 50 | 328 | 38 | 207 | 1206 | 14 | 86 |
| | 100 | 342 | 22 | 52 | 1361 | 10 | 90 |
| | 200 | 347 | 19 | 45 | 1368 | 9 | 91 |

Les teneurs en sucres neutres des pectines après purification de la pectine par les caséinates de sodium peuvent également être modulés en fonction de la concentration en sel (20 mM à 200 mM) lors de la dispersion du culot à pH 6.5, comme le monre le tableau 4 (résultats exprimés en pourcentage en poids par rapport à la matière séche de la pectine).

**Tableau 4**

| | Pectine initiale non purifiée | Pectine purifiée avec concentration en NaCl | | | | |
|---|---|---|---|---|---|---|
| | | 200 mM | 100 mM | 50 mM | 20 mM | 0 mM |
| Rhamnose | 0,6 | 0,4 | 0,3 | 0,3 | 0,3 | 0,4 |
| Arabinose | 3,3 | 1,9 | 1,9 | 1,9 | 1,8 | 1,9 |
| Xylose | 0,3 | 0,3 | 0,2 | 0,2 | 0,2 | 0,3 |
| Mannose | 0,2 | 0,10 | 0,1 | 0,1 | 0,1 | 0,1 |
| Glucose | 0,9 | 0,2 | 0,2 | 0,2 | 0,2 | 0,2 |
| Galactose | 5,2 | 3,2 | 2,6 | 2,5 | 2,2 | 3,1 |

### EXEMPLE 2

On a préparé une solution de pectine de citron à une concentration de 5 gramme par litre d'eau distillée. Cette solution est amenée à pH 3,5 avec de l'acide chlorhydrique dilué. Une solution de caséine à 10 grammes par litre est préparée en amenant le pH à 3,5 par ajout de HCl 0.6 N puis de NaOH 0.9 M. 100 ml de solution de pectine de citron sont précipités par environ 140 ml de caséinates de sodium. La précipitation est observée visuellement et est vérifiée par la neutralisation des charges grâce au système Mutek.

Le complexe polysaccharides-protéines est récupéré par filtration sur un filtre nylon de 0.45 µm et est ensuite dispersé dans 70 ml l'eau distillée. Le pH est ajusté à 6.5 par ajout progressif de NaOH 1M afin de redisperser le complexe. Après la mise en solution du culot, du NaCl est ajouté de manière à obtenir une concentration finale de 200 mM. La précipitation des caséines est observée en ajoutant de l'HCl jusqu'à pH 4.6.

### EXEMPLE 3

Une première étape consiste à extraire les pectines à partir de pulpes de chicorées. 25 grammes de pulpes sèches de chicorée sont mélangés avec 1 litre d'eau distillée et le tout est porté à pH 1.5 avec de l'acide sulfurique. Le mélange est chauffé à 85°C pendant 1 heure sous agitation magnétique.

L'extrait pectique est récupéré ensuite par filtration sous vide sur un filtre en nylon de 20 µm. L'extrait est refroidi dans la glace et le pH est remonté à 3,5 avec de la soude 1M. 700 ml d'une solution de caséine à 1% sont ensuite ajoutés jusqu'à précipitation des pectines. L'étape de séparation du complexe et la récupération de la pectine purifiée sont identiques à l'exemple 2. Le culot final de caséine contient environ 90,5% de protéines et le surnageant contient 93,2 % de pectine.

### EXEMPLE 4

Une solution d'alginate à 1 g/l et une solution de caséine 5 g/l ont été préparées. Leurs pH ont été ajustés à 3.5 respectivement par ajout de NaOH 1 M et d'HCl suivi de NaOH 1 M pour les caséines. A 100 ml de la solution d'alginates, il est nécessaire d'ajouter environ 45 ml de solution de caséines pour observer la précipitation. L'étape de séparation du complexe et la récupération de l'alginate purifié sont identiques aux exemples ci dessus.

## Revendications

1. Procédé de purification d'un polysaccharide chargé électriquement choisi parmi les alginates, les gommes de xanthanes, les carraghénanes, les pectines et le chitosane, ledit procédé comprenant les étapes suivantes:
(a) la préparation d'une première composition comprenant au moins ledit polysaccharide chargé électriquement et d'une deuxième composition comprenant au moins une protéine réversible chargée électriquement, les signes des charges électriques dudit polysaccharide et de ladite protéine contenus respectivement dans la première composition et dans la deuxième composition étant opposés l'un à l'autre;
(b) la mise en contact de la première composition et de la deuxième composition à un pH de précipitation suffisamment éloigné du point isoélectrique de la protéine réversible de la deuxième composition pour obtenir la formation d'au moins un complexe polysaccharide -protéine par précipitation;
(c) la récupération du complexe polysaccharide-protéine formé dans l'étape (b);
(d) la mise en solution dans un milieu aqueux du complexe poly-saccharide-protéine récupéré dans l'étape (c) à un pH suffisamment éloigné du point isoélectrique de la protéine réversible pour obtenir la solubilisation dudit complexe, les signes des charges électriques du polysaccharide et de la protéine réversible dans la solution étant identiques;
(e) la mise à pH de la solution au point isoélectrique de la protéine réversible pour obtenir la précipitation de la protéine réversible;
(f) la récupération du polysaccharide chargé électriquement purifié; et
(g) la récupération de la protéine réversible précipitée.

2. Procédé suivant la revendication 1, **caractérisé en ce qu'**il comprend en outre les étapes suivantes :
(h) la remise en solution ou dispersion de la protéine réversible précipitée récupérée à l'étape (h), et
(i) le recyclage de la protéine réversible en solution provenant de l'étape (h) pour constituer au moins une partie de la deuxième composition préparée à l'étape (a).

3. Procédé suivant la revendication 1 ou la revendication 2, **caractérisé en ce que** la protéine réversible chargée électriquement entrant dans la préparation de la deuxième composition est choisie dans le groupe constitué de la caséine, des sels de caséine, des caséinates, des protéines de lait, des protéines de sérum sanguin, des protéines de pois, des protéines de soja et de leurs mélanges en toutes proportions.

4. Procédé suivant la revendication 3, **caractérisé en ce que** les sels de caséine sont choisis dans le groupe consistant en les sels de sodium, d'ammonium et de potassium.

5. Procédé suivant la revendication 4, **caractérisé en ce que** le polysaccharide chargé électriquement entrant dans la préparation de la première composition est choisi parmi les pectines de pomme, de betterave, de chicorée, de citron et leurs mélanges en toutes proportions.

6. Procédé suivant l'une quelconque des revendications 1 à 5, **caractérisé en ce qu'**il comporte en outre le traitement thermique du complexe polysaccharide-protéine formé dans l'étape (b) et/ou du poly-saccharide récupéré dans l'étape (f).

7. Procédé suivant l'une quelconque des revendications 1 à 6, **caractérisé en ce que** la récupération du complexe polysaccharide-protéine dans l'étape (c) et/ou la récupération de la protéine réversible précipitée dans l'étape (g) est effectuée par centrifugation, décantation et/ou filtration.

8. Procédé suivant l'une quelconque des revendications 1 à 7, **caractérisé en ce que** l'étape (d) est effectuée avec ajout d'au moins un sel.

9. Procédé suivant l'une quelconque des revendications 1 à 8, **caractérisé en ce que** le rapport en poids de la première composition à la seconde composition dans l'étape (b) est ajusté en fonction des charges électriques des deux compositions et peut être compris entre 2 :1 et 10 :1 environ.

10. Polysaccharide chargé électriquement et purifié obtenu par le procédé suivant l'une quelconque des revendications 1 à 9.

11. Composition alimentaire, pharmaceutique ou cosmétique comprenant au moins un polysaccharide chargé électriquement et purifié obtenu par le procédé suivant l'une quelconque des revendications 1 à 9.
